# EUROPÄISCHE PATENTSCHRIFT

(11) **EP 3 197 318 B1**
(45) Veröffentlichungstag und Bekanntmachung des Hinweises auf die Patenterteilung: **03.02.2021**
(21) Anmeldenummer: 15759783.2
(22) Anmeldetag: 04.09.2015
(51) Int. Cl.: A47B 88/40

(54) **VERSTELLEINRICHTUNG**
ADJUSTMENT DEVICE
DISPOSITIF DE RÉGLAGE

(30) Priorität: 26.09.2014 DE 102014113954
(43) Veröffentlichungstag der Anmeldung: 02.08.2017
(73) Patentinhaber: Samet Kalip Ve Maden Esya San. Ve Tic. A.S., 34513 Istanbul (TR)
(72) Erfinder: PRENTNER, Christian, 6844 Altach (AT); TANRIVERDI, Himmet, 34513 Istanbul (TR)
(74) Vertreter: Herrmann, Jochen
(86) Internationale Anmeldenummer: PCT/EP2015/070265
(87) Internationale Veröffentlichungsnummer: WO 2016/045942

(56) Entgegenhaltungen:
- EP-A2- 1 203 861
- WO-A1-2012/092633
- WO-A1-2012/142630
- DE-U1-202008 012 170
- US-A- 5 281 022

## Beschreibung

Die Erfindung betrifft eine Schublade mit einer Verstelleinrichtung zur Einstellung der Ausrichtung einer Frontblende der Schublade mit einer Halterung und einer Stelleinheit, wobei die Stelleinheit gegenüber der Halterung mittels einer Justiereinrichtung verstellbar ist.

Bei modernen Schubladen ist eine exakte Ausrichtung der Frontblende gegenüber dem Möbelkorpus gewünscht. Dabei muss die Frontblende nicht nur in Richtung der durch die Frontblende definierten Vertikalebene verstellbar sein. Vielmehr ist es auch gefordert, die Neigung der Frontblende exakt einzustellen. Zu diesem Zweck wird üblicherweise im Rückwandbereich der Schublade eine Höhenjustierung vorgenommen, wobei die Schublade in ihrem Frontbereich fixiert bleibt um eine Schwenkachse zu bilden. Somit kann die Schublade um diese Schwenkachse verkippt werden, sodass auch die Winkellage der Frontblende einstellbar wird.

Solche Verstelleinrichtungen müssen einfach aufgebaut und zuverlässig bedienbar sein. Insbesondere muss während des Betriebes der Schublade eine unerwünschte Verstellung der Winkellage der Frontblende verhindert werden. Wenn sich beispielsweise während des Betriebes in einer darunterliegenden Schublade darin befindliche Gegenstände aufstellen und gegen die darüber liegende Schublade drücken, so muss sichergestellt werden, dass die Verstelleinrichtung sich nicht unbeabsichtigt verstellt. Eine gattungsgemäße Schublade wird beispielsweise in der DE 20 2008 012 170 U1 offenbart.

Es ist daher Aufgabe der Erfindung, eine Schublade der eingangs erwähnten Art bereitzustellen, bei der mit einfachem Aufbau eine zuverlässige Einstellung der Frontblende möglich wird.

Diese Aufgabe wird dadurch gelöst, dass die Justiereinrichtung der Verstelleinrichtung der Schublade zwei verstellbare Stützabschnitte aufweist, die mit Gegenlagern derart zusammenwirken, dass die Stelleinheit in zwei entgegengesetzte Richtungen geführt verstellbar ist, dass die Stützabschnitte jeweils auf einer Exzenterbahn verstellbar sind, und dass die Exzenterbahnen gegenläufig orientiert sind. Mit den beiden Stützabschnitten kann eine zwangsgeführte Verstellung der Schublade sowohl in, als auch entgegengesetzt zur Schwerkraftrichtung durchgeführt werden. Bei entsprechender Auslegung können die Gegenlager stufenlos mit der Justiereinrichtung verstellt werden.

Wenn beide Stützabschnitte spielfrei oder im Wesentlichen spielfrei gegenüber den Gegenlagern, zumindest in einem Teilbereich ihrer Bewegung geführt sind, so wird in diesem Teilbereich zuverlässig ein unbeabsichtigter Höhenversatz der eingestellten Schublade verhindert und somit die Position der Frontblende zuverlässig aufrechterhalten.

Erfindungsgemäß ist vorgesehen, dass die Stelleinheit gegenüber der Halterung in Höhenrichtung derart verstellbar ist, dass ein Stützabschnitt die Stelleinheit in und der andere Stützabschnitt die Halterung entgegengesetzt zur Schwerkraftrichtung verstellt. Hierdurch wird eine beidseitige Abstützung der Stelleinheit gegenüber der Halterung in Höhenrichtung möglich und eine zuverlässige Ausrichtung der Frontblende bleibt erhalten.

Eine einfache Bedienung der Verstelleinrichtung lässt sich dadurch erreichen, dass die Justiereinrichtung drehbar an der Halterung oder der Stelleinheit gehalten ist. Hierdurch wird zudem ein geringer Teile- und Montageaufwand erreicht.

Die Bedienung lässt sich dann weiter vereinfachen wenn vorgesehen ist, dass die Justiereinheit eine Werkzeugaufnahme aufweist, die seitlich in Drehrichtung der Drehachse des Justierelementes zugängig ist. Bevorzugt ist die Werkzeugaufnahme von der Innenseite der Schublade her zugänglich. Wenn vorgesehen ist, dass das Justierelement zwischen zwei oder mehreren Rastpositionen verstellbar ist, wobei die Rastposition vorzugsweise im gleichen Teilungsabstand zueinander beabstandet sind, dann wird eine einfache Einstellung der Schublade möglich. Insbesondere können von einem Anwender die Rastpositionen beim Verstellen des Justierelementes auf der einen Schubladenseite gezählt werden. Auf der anderen Schubladenseite lässt sich dann die entsprechende Anzahl von Rastpositionen einstellen, sodass die Schublade beidseitig gleich ausgerichtet ist. Zudem können bei entsprechender Auslegung der Rastpositionen unbeabsichtigte Verdrehungen zwischen der Halterung und der Stelleinheit verhindert werden. Zusätzlich oder alternativ kann es auch vorgesehen sein, dass die Stützabschnitte mit den Gegenlagern selbsthemmend zusammenwirken. Auch auf diese Weise kann eine unbeabsichtigte Verstellung der Einstellposition ebenfalls verhindert werden.

Eine weitere Verringerung des Montageaufwandes und des Teileaufwandes kann dadurch erreicht werden, dass die Stelleinheit vorzugsweise einteilig angeformte Führungsstücke aufweist, die mit Führungsabschnitten der Halterung zur Bildung einer Schiebeführung zusammenarbeiten.

Eine mögliche Erfindungsvariante kann dergestalt sein, dass die Justiereinheit mittels eines Lagerteils drehbar und in Richtung der Drehachse gesichert gehalten ist. Dabei kann es insbesondere auch vorgesehen sein, dass das Lagerteil einen angeformten Lageransatz aufweist, der mit der Lageraufnahme der Justiereinheit zur Bildung eines Drehlagers zusammenarbeitet.

Die Montage wird zudem bei einer solchen Konstruktion dadurch vereinfacht, dass die Halterung die Stelleinheit und das Lagerteil zu einer Baueinheit miteinander verbunden, vorzugsweise verrastbar sind.

Eine einfache Konstruktion ergibt sich dann, wenn vorgesehen ist, dass die Gegenlager einteilig an die Halterung oder an die Stelleinheit angeformt sind. Bei einer erfindungsgemäßen Verstelleinrichtung kann es zudem auch vorgesehen sein, dass die Halterung eine rückwärtige Abwinkelung aufweist, zur Ankopplung an die Rückwand einer Schublade.

Die Erfindung wird im Folgenden anhand eines in den Zeichnungen dargestellten Ausführungsbeispiels näher erläutert. Es zeigen:
- Fig. 1: in perspektivischer Teildarstellung eine Schublade,
- Fig. 2: die Schublade gemäß Fig. 1 in Perspektive und in einer vergrößerten Detailansicht, wobei die Rückwand der Schublade abgenommen ist,
- Fig. 3: eine Rückansicht auf die Schublade in teilweiser geschnittener Darstellung,
- Fig. 4: eine Verstelleinrichtung in perspektivischer Frontansicht,
- Fig. 5: die Verstelleinrichtung gem. Fig. 4, wobei eine Halterung demontiert wurde,
- Fig. 6: ein der Fig. 7 entlang der Schnittlinie VI-VI entnommenes Schnittdetail,
- Fig. 7: eine Innenansicht auf die Verstelleinrichtung,
- Fig. 8: die Verstelleinrichtung in perspektivischer Außenansicht und
- Fig. 9: die Verstelleinrichtung gemäß Fig. 8 in einer veränderten Montagedarstellung

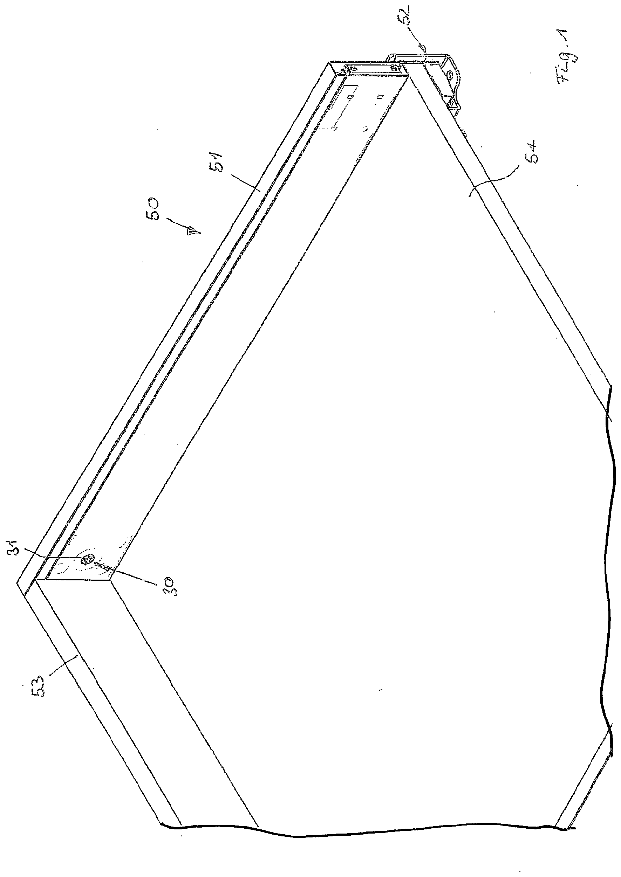

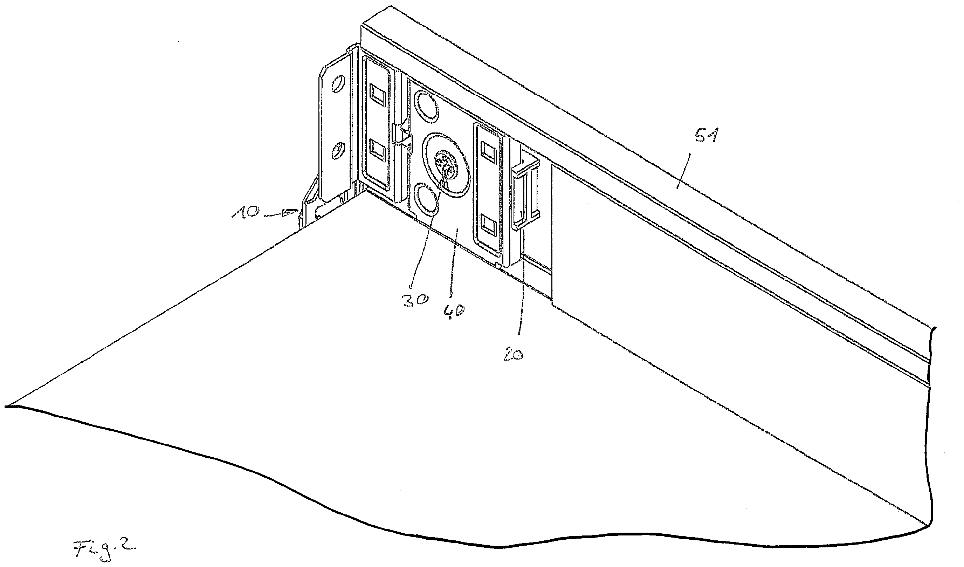

Fig. 1 zeigt eine Schublade 50 mit einem Boden 51, zwei in Tiefenrichtung verlaufenden Zargen 51 und einer Rückwand 53. Die Frontwand der Schublade 50 wurde zur besseren Übersichtlichkeit abgenommen. Die Zargen 51 sind als Hohlwandzargen ausgeführt und nehmen in ihrem rückwärtigen Bereich jeweils eine Verstelleinrichtung 30 auf. In Fig. 2 wurde zur besseren Übersichtlichkeit und Darstellung der Verstelleinrichtung ein Teil der Innenwand der Zarge 51 entfernt, sodass der Blick auf die Verstelleinrichtung freigegeben ist. Wie diese Darstellung erkennen lässt, weist die Verstelleinrichtung eine Halterung 10, ein Lagerteil 20, die Justiereinheit 30 und eine Stelleinheit 40 auf.

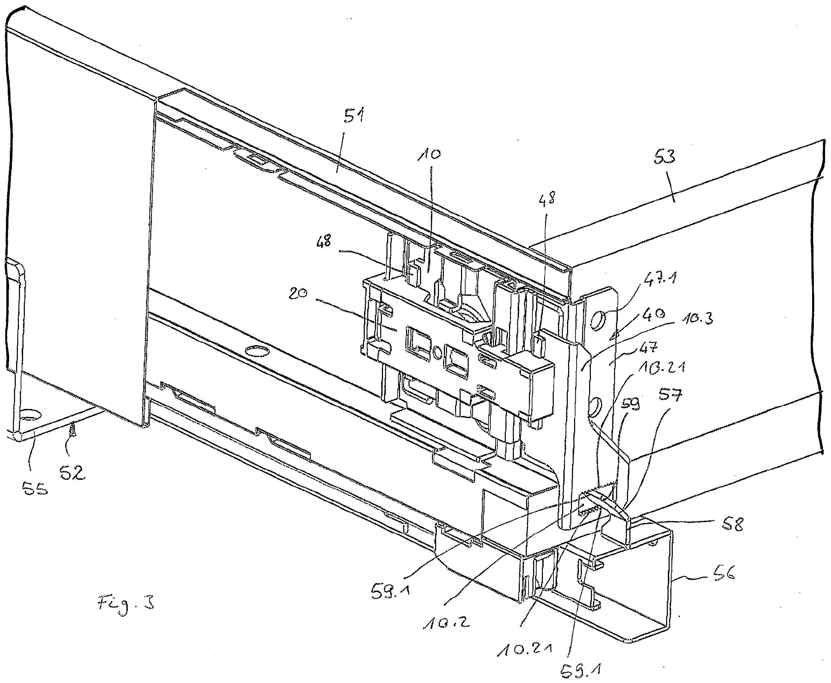

Fig. 3 zeigt eine Außenecke der Schublade 50 im Rückwandbereich. Dabei ist die Außenseite der Zarge 51 geschnitten dargestellt, sodass der Blick auf die Verstelleinrichtung außenseitig freigegeben ist. Wie diese Darstellung erkennen lässt, ist die Zarge 51 in üblicher Weise an einer Auszugschiene 52 montiert. Die Auszugschiene 52 besitzt eine Korpusschiene 55 mit der sie an einen Möbelkorpus innenseitig befestigt werden kann. Weiterhin umfasst die Auszugschiene 52 eine Mittelschiene und eine Ladenschiene 56. Die Ladenschiene 56 ist gegenüber der Korpusschiene 55 in Richtung der Schubladentiefe verstellbar.

Die Montage der Schublade 50 erfolgt üblicherweise dergestalt, dass zunächst die beiden Zargen 51 seitlich am Boden 54 befestigt werden. Die Verstelleinrichtung ist innerhalb der Hohlkammer der Zarge 51 aufgenommen und hierin befestigt. Nachdem die Zargen 51 mit dem Boden 54 verbaut wurden, lässt sich die Rückwand 53 an der Stelleinheit 40 anschrauben. Die so montierte Schublade 50 kann nun in einen dafür vorgesehenen Bereich eines Möbelkorpus eingesetzt werden. In diesem Bereich sind bereits die beiden Auszugschienen 52 montiert. Die Schublade 50 lässt sich bodenseitig auf die Ladenschiene 56 aufsetzen und in Tiefenrichtung darauf verschieben. Wie Fig. 3 erkennen lässt, ist an der Ladenschiene 56 ein Fanghaken 57 befestigt. Im vorliegenden Fall ist der Fanghaken 57 als separates Bauteil ausgeführt, der mit der Ladenschiene 56 verbunden, beispielsweise verschweißt ist. Alternativ kann der Fanghaken 57 auch von der Ladenschiene 56 freigestanzt und von dieser abgewinkelt sein. Der Fanghaken 57 besitzt einen Anbindungsabschnitt 58 über den er mit der Deckseite der Ladenschiene 56 verbunden ist. Ein Hakenkopf 59 des Fanghakens 57 ist plattenförmig ausgestaltet und bezüglich der Horizontalen um einen vorgegebenen Winkel geneigt, vorzugsweise im Bereich zwischen 30 und 60° geneigt. Der Fanghaken 57 ist im Bereich seines Hakenkopfes 59 mit zwei gegeneinander geneigten Formschrägen 59.1 ausgerüstet, die Formschrägen 59.1 sind zueinander pfeilförmig angestellt. Die Formschrägen 59.1 sind Teil eines Vorsprunges des Hakenkopfes 59, der in eine Aussparung 10.2 der Halterung 10 eingreift. Die Aussparung 10.2 weist an gegenüberliegenden Seiten Verzahnungen 10.2 1 auf. Die Verzahnungen 10.2 1 weisen Zähne auf, die zueinander vorzugsweise in gleicher Teilung beabstandet angeordnet sind. Die Formschrägen 59.1 stehen jeweils im Eingriff mit einer Verzahnung 10.2 1. Dementsprechend stützt sich die obere Formschräge 59.1 an der oberen Verzahnung 10.2 1 und die untere Formschräge 59.1 an der unteren Verzahnung 10.2 1 ab. Wenn also die Schublade 50 in Tiefenrichtung verschoben wird, so gelangt sich in Eingriff mit dem Fanghaken 57, der die Tiefenverstellung der Schublade 50 begrenzt. Dabei gelangen die Formschrägen 59.1 in Eingriff mit der Verzahnung 10.2 1, was durch die pfeilförmige Anstellung der Formschrägen 59.1 erleichtert wird. Auf diese Weise wird eine spielfreie Verspannung der Schublade 50 in dem Rückwandbereich sowohl in Vertikal- als auch in Horizontalrichtung bewirkt. Die Querausdehnung der Aussparung 10.2 in Horizontalrichtung ist größer als die Erstreckung des Hakenkopfes 59 in dieser Richtung. Auf diese Weise kann eine begrenzte Seitenverstellung der Schublade 50 vorgenommen werden. Mit dieser Maßnahme lässt sich mithin ein Toleranzausgleich in Horizontalrichtung vornehmen. Dabei kann mit diesem Toleranzausgleich auf eine toleranzbedingte Korpusbreite bzw. eine toleranzbedingte Variation der Breite des Bodens 54 reagiert und diese ausgeglichen werden.

Vorzugsweise ist die vorbeschriebene Ausgestaltung eines Fanghakens 54 und einer Aussparung 10.2 an beiden Seiten der Rückwand 53 der Schublade 50 vorgesehen. Im Folgenden wird der Aufbau und die Funktionsweise der Verstelleinrichtung näher erläutert. Die Verstelleinrichtung umfasst eine Halterung 10, eine Stelleinheit 40 sowie eine zwischen der Stelleinheit 40 und der Halterung 10 eingefasste Justiereinheit 30. Zur Fixierung dieser Bauteile ist ein Lagerteil 20 verwendet.

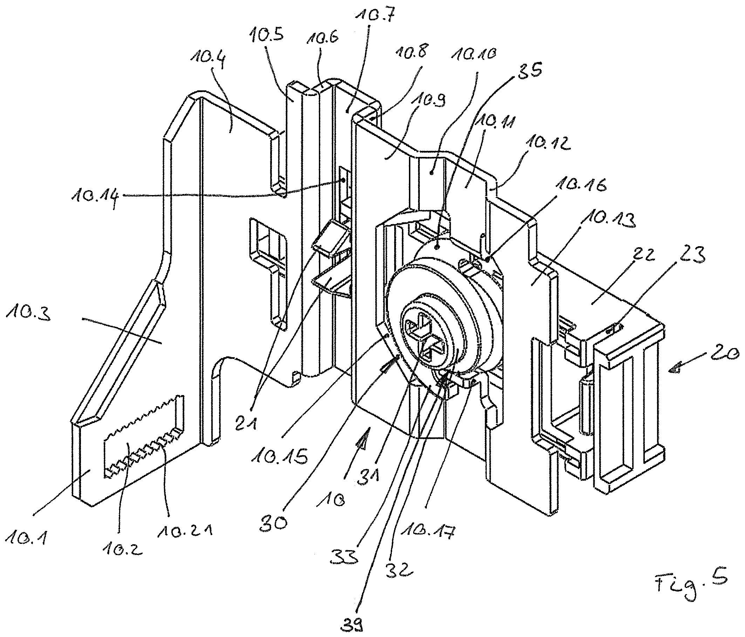

Wie Fig. 3 erkennen lässt, besitzt die Halterung 10 ein Stützteil 10.1, das mit der Aussparung 10.2 versehen ist. Deutlich erkennbar sind in Fig. 5 die Verzahnungen 10.2 1 der Aussparung 10.2. Das Stützteil 10.1 ist Teil einer Abwinkelung 10.3 die an eine Abkantung 10.4 angeschlossen ist. An die Abkantung 10.4 schließen sich Führungsabschnitte 10.5 bis 10.8 an. Dabei können vorzugsweise die benachbarten Führungsabschnitte 10.5 bis 10.8 jeweils im rechten Winkel zueinander stehen. Der Führungsabschnitt 10.8 geht in eine Wandung 10.9 über. Von der Wandung 10.9 ist eine Abkantung 10.10 abgewinkelt, die über einen Übergangsabschnitt 10.11 in eine weitere Abkantung 10.12 übergeht. An ihrem freien Ende schließt die Halterung 10 mit einem Endabschnitt 10.13 ab. Die Halterung 10 ist mit einer Aussparung 10.15 versehen, die beispielsweise in Form eines Durchbruches ausgeführt ist. In den Bereich der Aussparung 10.15 ragen Ansätze der Halterung 10.14, die Gegenlager 10.16, 10.17 tragen. Im vorliegenden Ausführungsbeispiel sind hierzu von dem Übergangsabschnitt 10.11 lappenförmige Abschnitte abgebogen, um die Gegenlager 10.16 und 10.17 zu bilden. Wie Fig. 5 erkennen lässt, sind die Gegenlager 10.16, 10.17 in entgegengesetzte Richtungen abgewinkelt.

Fig. 5 gibt weiter zu erkennen, dass im Bereich eines Führungsabschnittes 10.7 eine Ausnehmung in Form eines Fensters 10.14 vorgesehen ist. Die Halterung 10 ist vorzugsweise als Stanzbiegeteil aus einem Blechzuschnitt gefertigt.

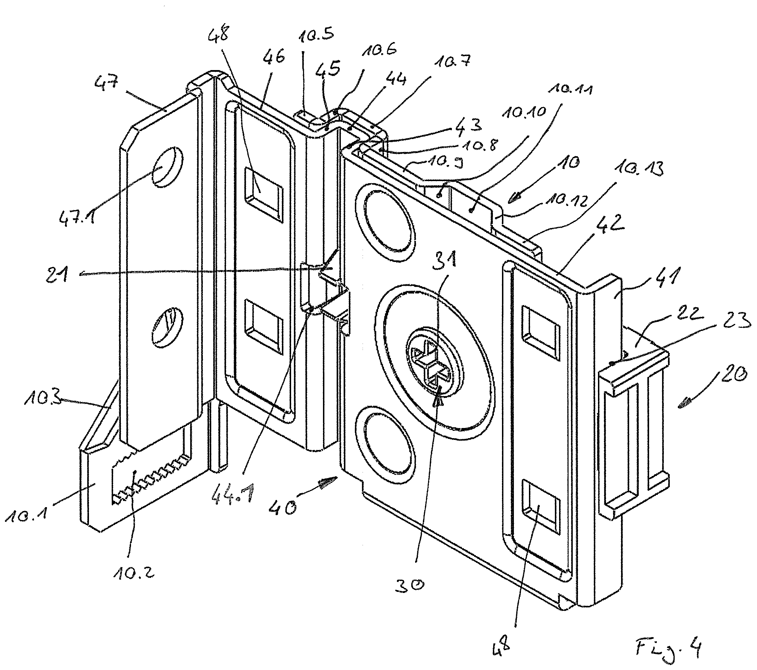

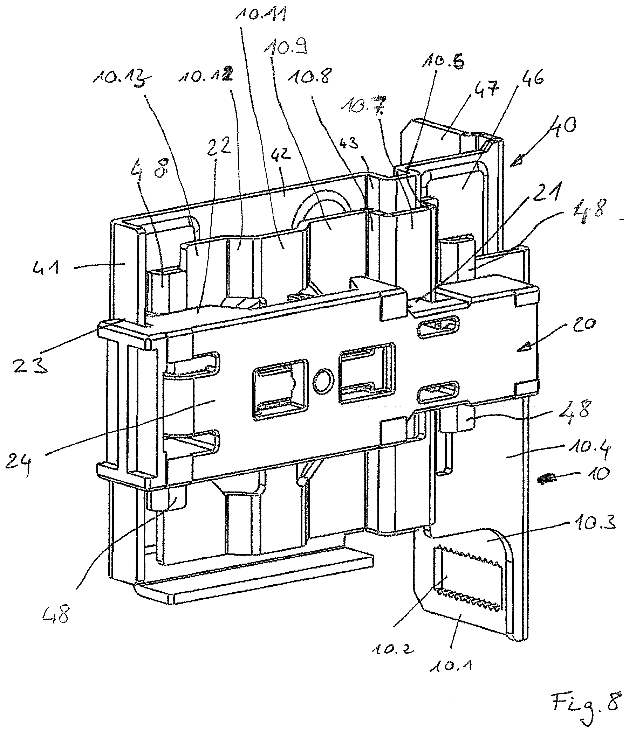

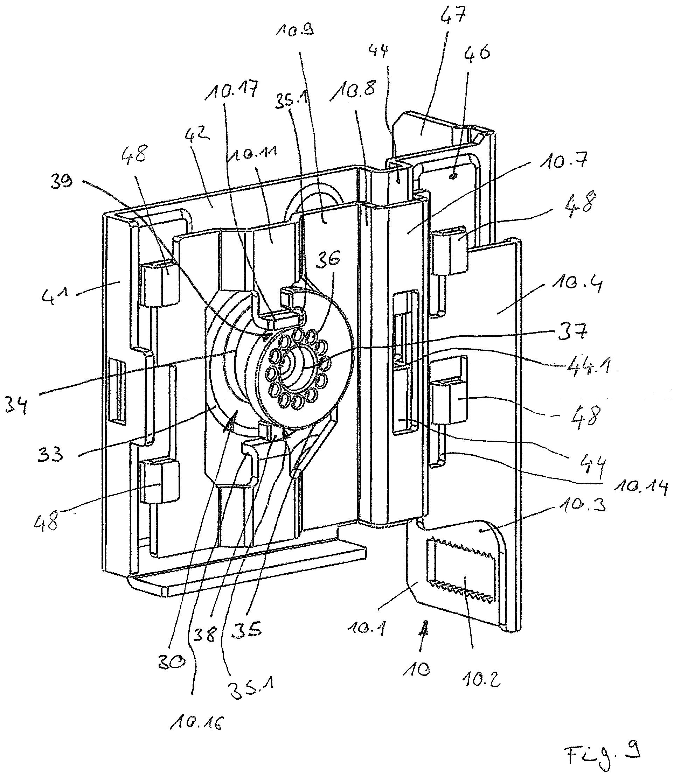

Fig. 4 zeigt die Stelleinheit 40, die mit der Halterung 10 verbunden werden kann. Die Stelleinheit 40 besitzt eine Lagerwand 42 von der ein Ansatz 41 zur Rückseite hin abgebogen ist. Gegenüberliegend dem Ansatz 41 weist die Lagerwand 42 Führungsstücke 43, 44, 45 auf. Im vorliegenden Fall sind drei Führungsstücke 43, 44, 45 verwendet, die miteinander U-förmig verbunden sind. Die Wahl der Anzahl und der Ausgestaltung der Führungsstücke 43, 44, 45 ist angepasst auf die Führungsabschnitte 10.5 bis 10.8 der Halterung 10 ausgelegt. Auf diese Weise können die Führungsstücke 43, 44, 45 und die Führungsabschnitte 10.5 bis 10.8 zur Bildung einer Linear-Schiebeführung zusammenwirken. An die Führungsstücke 43, 44, 45 schließt sich ein Endabschnitt 46 an. Dieser Endabschnitt 46 geht über eine Abkantung in ein Befestigungsstück 47 über. Das Befestigungsstück 47 ist mit Befestigungsaufnahme 47.1 versehen. Wie Fig. 4 erkennen lässt, kann die Stelleinheit 40 an die Halterung 10 angesetzt werden. Dabei greifen die Führungsstücke 43 bis 45 in die von den Führungsabschnitten 10.5 bis 10.8 gebildete Führungsaufnahme ein. Die Frontwand 42 liegt an der Wandung 10.9 und dem Wandungsabschnitt 10.13 der Halterung 10 gleitend an. Wie Fig. 3 erkennen lässt, liegen weiterhin das Befestigungsstück 47 und die Abwinkelung 10.3 aneinander. Diese Zeichnung und insbesondere auch Fig. 8 lassen erkennen, dass die Stelleinheit 40 Führungshaken 48 aufweist. Diese können beispielsweise von der Stelleinheit 40 freigestanzt und rückwärtig abgebogen sein. Die Führungshaken 48 umgeben Führungsaufnahmen. In diese Führungsaufnahmen der Führungshaken 48 ist die Vertikalkante des Wandabschnittes 10.13 eingeschoben. Fig. 9 zeigt, dass die Abkantung 10.4 der Halterung 10 ebenfalls freigestellte Kantenabschnitte aufweist, die von den Führungshaken 48 übergriffen sind. Somit werden mit den Führungshaken 48 und den zugeordneten Kantenabschnitten der Halterung 10 Längsführungen gebildet. Zudem verbinden die Führungshaken 48 die Halterung 10 und die Stelleinheit 40 miteinander.

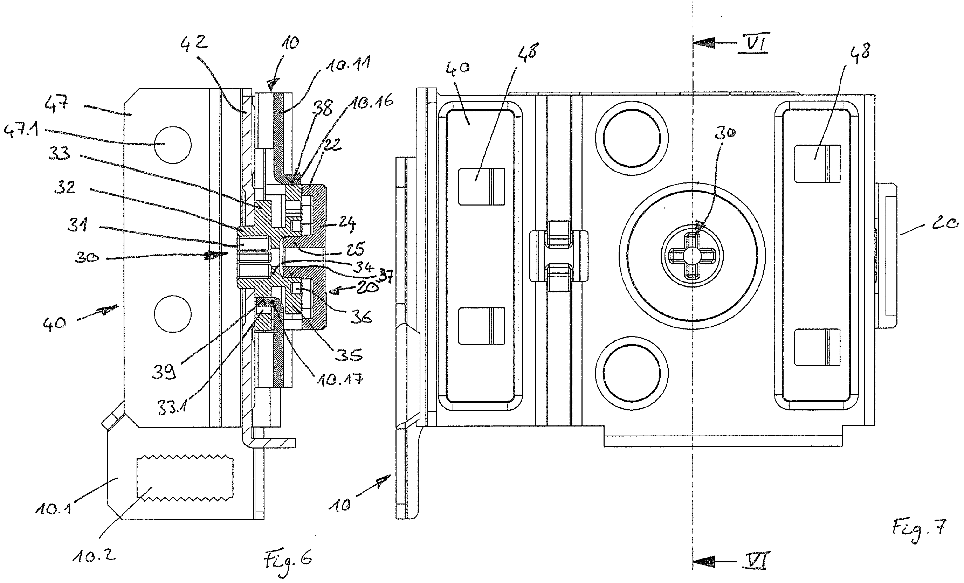

Fig. 9 zeigt eine Justiereinheit 30, die als Rotationskörper ausgebildet sein kann. Die Justiereinheit 30 ist zumindest bereichsweise zwischen der Halterung 10 und der Stelleinheit 40 angeordnet. Fig. 6 lässt den Aufbau der Justiereinheit 30 näher erkennen. Wie diese Darstellung zeigt, besitzt die Justiereinheit 30 eine Werkzeugaufnahme 31. Diese Werkzeugaufnahme 31 kann in ein Lagerstück 32 eingebracht sein. Die Werkzeugaufnahme 32 ist so angeordnet und ausgerichtet, dass sie von der Innenseite der Schublade 50 her zugänglich ist (siehe Fig. 1). Das Lagerstück 32 ist in der Form eines Zylinders ausgebildet. An das Lagerstück 32 schließt sich eine Führung an, die in Form eines ersten Exzenters 33 ausgebildet ist. Die Justiereinheit 30 umfasst weiterhin einen zweiten Exzenter 35. Die beiden Exzenter 33 und 35 sind über einen Verbindungsabschnitt 34 einteilig miteinander verbunden. Wie Fig. 9 zeigt, bildet jeder Exzenter 33, 35 eine Bogenbahn, die einen Stützabschnitt 38, 39 aufweist. Die Exzenter 33, 35 sind dabei entgegengesetzt orientiert und hinsichtlich ihrer Bogenbahnführung identisch aufgebaut. Während der in Fig. 9, dem Betrachter zugewandte äußere Exzenter in Bezug auf die Drehachse der Justiereinheit 30 eine kontinuierliche Vergrößerung des Abstandes des Stützabschnittes 39 entgegengesetzt zur Urzeigerrichtung schafft, nimmt bei dem zweiten Exzenter 33 der Abstand des Befestigungsabschnittes im Uhrzeigersinn zu. Im Ausführungsbeispiel sind hierzu die Führungsbahnen der Exzenter 33, 35 sowohl um die durch die Drehachse der Justiereinheit 30 verlaufende Vertikalebene und die Horizontalebene um 180° gespiegelt. Die Stützabschnitte 38, 39 der Justiereinheit 30 arbeiten mit den Gegenlagern 10.16 und 10.17 zusammen. Dementsprechend liegen die Gegenlager 10.16, 10.17 jeweils an den Stützabschnitten 38, 39 an. Dabei ist die Anlage so getroffen, dass die Stützabschnitte 38, 39 spielfrei an den Gegenlagern 10.16, 10.17 anliegend. Spielfrei bedeutet in diesem Sinne, dass zwischen diesen Bauteilen ein Toleranzabstand im Bereich zwischen 0 bis 0,2 mm vorliegen kann. Die Geometrie und Ausrichtung der Exzentrizität ist so gewählt, dass der Abstand der Stützabschnitte 38, 39 im Anlagebereich der Gegenlager 10.16, 10.17 unabhängig von der Drehstellung der Justiereinheit 30 stets gleich ist. Wenn nun beispielsweise in Fig. 9 die Justiereinheit 30 im Uhrzeigersinn rotiert wird, so hebt der Exzenter 35 das Gegenlager 10.17 kontinuierlich nach oben wodurch, bei fixierter Halterung 10 sich die Verstelleinheit 40 nach unten schiebt. Bei dieser Verdrehung der Justiereinheit 30 liegt zeitgliche auch das Gegenlager 10.16 an dem Exzenter 33 an, sodass eine Spielfreiheit in Vertikalrichtung zwischen der Halterung 10 und der Stelleinheit 40 erreicht ist.

Fig. 9 lässt erkennen, dass die Justiereinheit 30 auf ihrer, dem Lagerstück 32 abgewandten Seite mit einer Lageraufnahme 37 versehen ist. Diese Lageraufnahme 37 ist als Hohlzylinder aufgeführt. Fig. 6 lässt erkennen, dass in diese Lageraufnahme 37 ein Lageransatz 25 des Lagerteils 20 zur Bildung einer Drehlagerung eingreift. Das Lagerteil 20 ist entsprechend Fig. 8 mit einem Deckabschnitt 24 versehen, an den der Lageransatz 25 einteilig angeformt ist. Von dem Deckabschnitt 24 gehen Seitenwände 22 ab. Diese Seitenwände 22 sind auf der Außenseite der Halterung 10 abgestützt. Weiterhin umfasst das Lagerteil 20 Rasthaken 21. Im Bereich der Vorderseite ist das Lagerteil 20 mit einer Aufnahme 23 versehen. Diese ist im vorliegenden Ausführungsbeispiel als schlitzförmige Aufnahme 23 ausgeführt. Mit dieser Aufnahme 23 kann das Lagerteil auf den Ansatz 41 aufgeschoben werden. Bei dieser Schiebebewegung wird auch der Lageransatz 25 in die Lageraufnahme 37 der Justiereinheit 30 eingesetzt. Wird die Fügebewegung weiter fortgesetzt, so greifen die Rasthaken 21 durch das Fenster 10.14 der Abkantung 10.4 (siehe Fig. 9) hindurch und verrasten an gegenüberliegenden Rastkanten 44.1 des Führungsstückes 44 der Stelleinheit 40 (siehe ebenfalls Fig. 9). Mit dem Lagerteil 20 werden die Halterung 10, die Justiereinheit 30 und die Stelleinheit 40 zuverlässig miteinander verbunden.

Die vorbeschriebene Verstelleinrichtung wird, wie oben bereits angegeben, in der Hohlkammer einer Hohlkammerzarge 51 untergebracht. Sie wird darin mit der Halterung 10 geeignet gekoppelt. Beispielsweise kann die Halterung 10 mit der Zarge 51 verschweißt werden. Die Stelleinheit 40 ist über das Befestigungsstück 47 mit der Rückwand 53 der Schublade 50 verbunden. Hierzu können beispielsweise Befestigungsschrauben durch die Befestigungsaufnahme 47.1 hindurchgeführt und in die Rückwand 53 eingeschraubt werden. Mithin steht also die Stelleinheit 40 in fester Verbindung mit der Schublade 50. Die Halterung 10 ist über die Zarge 51 und das Stützteil 10.1 fest an die Auszugschiene 52 angekoppelt, wie dies oben bereits beschrieben wurde. Da die Auszugschiene 52 Teil des Möbelkorpus ist, ist mithin die Halterung 10 dem Möbelkorpus fest zugeordnet. Wenn nun ein geeignetes Werkzeug, beispielsweise ein Schraubendreher in die Werkzeugaufnahme 31 eingestellt und von der Schubaldeninnenseite her die Justiereinheit 30 verdreht wird, so verstellt sich über die oben beschriebene Exzentermechanik das Stellteil 40 in Vertikalrichtung gegenüber der Halterung 10. Unabhängig von der Drehrichtung kann das Stellteil 40 entweder nach oben oder nach unten verschoben werden. Mit dieser Verschiebung wird dann auch die Höhenausrichtung der Schublade 50 im Rückwandbereich verändert. Die Schublade 50 ist nun in ihrem Frontwandbereich fest der Ladenschiene 56 zugeordnet. Damit wird durch die Höhenverstellung im Rückwandbereich letztlich eine Verschwenkung der Schublade 50 erreicht. Diese Verschwenkung führt dazu, dass die Frontblende der Schublade 50 in ihrer Winkelausrichtung gegenüber der Vertikalen verändert werden kann. Vorzugsweise sind auf beiden Seiten der Schublade 50 Verstelleinrichtungen den Zargen 51 zugeordnet. Dabei sind die Verstelleinrichtungen spiegelsymmetrisch aufgebaut. Wenn die Justiereinheiten 30 der beiden Verstelleinrichtungen um das gleiche Maß verdreht werden, so ergibt sich auf beiden Seiten der Schublade 50 eine gleichmäßige Verkippung der Frontblende. Um dem Anwender ein gleichmäßiges einstellen zu erleichtern, ist die Justiereinheit 30 mit Rastungen 36 versehen, wie dies Fig. 9 erkennen lässt. Diese Rastungen 36 sind in gleicher Teilung zueinander beabstandet angeordnet und auf einem, um die Drehachse der Justiereinheit 30 umlaufenden Teilkreis angeordnet. Die Rastungen 36 arbeiten mit Gegenrastelementen des Lagerteils 20 zusammen. Beispielsweise können die Rastungen 36, wie in Fig. 9 dargestellt, als Rastaufnahmen ausgebildet sein. An der Unterseite des Deckabschnittes 24 des Lagerteils 20 kann ein federnd ausgebildetes Gegenrastelement angeordnet, beispielsweise einteilig am Lagerteil 20 angeformt sein. Denkbar ist die Verwendung einer federnden Rastzunge. Bei Verdrehen der Justiereinheit 30 rastet das Gegenrastelement in die ihm zugeordnete Rastaufnahme 36 ein. Auf diese Weise ist eine stufenweise Verstellung der Justiereinheit 30 möglich. Abhängig von der Ausbildung der Rastverbindung ist diese Rastverstellung für den Benutzer auch gut hörbar, sodass er auch zusätzlich ein akustisches Signal erhält, er also die Anzahl der Raststufen zählen kann.

Fig. 9 lässt erkennen, dass zur Vermeidung einer Fehlfunktion und Überdrehung der Justiereinheit 30 am Ende der Exzenter 33, 35 jeweils Anschläge 33.1, 35.1 vorgesehen sind. Diese Anschläge 33.1, 35.1 arbeiten mit den Gegenlagern 10.16 und 10.17 zur Begrenzung der Drehbewegung zusammen.

## Patentansprüche

1. Schublade (50) mit einer Frontblende, einer Rückwand, einem Boden (54), zwei in Tiefenrichtung der Schublade (50) verlaufenden, als Hohlwandzargen ausgebildeten Zargen (51), wobei die Zargen (51) in ihrem rückwärtigen Bereich jeweils eine Verstelleinrichtung zur Einstellung der Ausrichtung einer Frontblende der Schublade (50) aufnehmen, wobei die Verstelleinrichtung eine Halterung (10), eine Stelleinheit (40), eine Justiereinrichtung (30) und ein Lagerteil (20) aufweist,
wobei die Stelleinheit (40) gegenüber der Halterung (10) mittels der Justiereinrichtung (30) verstellbar ist, wobei die Stelleinheit (40) in zwei entgegengesetzte Richtungen geführt verstellbar ist,
wobei die Stelleinheit (40) gegenüber der Halterung (10) in Höhenrichtung der Schublade (50) verstellbar ist,
wobei die Justiereinrichtung (30) zwei verstellbare Stützabschnitte (38, 39) aufweist, die mit Gegenlagern (10.16, 10.17) zusammenwirken, wobei die Stützabschnitte (38, 39) jeweils auf einer Exzenterbahn verstellbar sind, und wobei die Exzenterbahnen gegenläufig orientiert sind,
wobei ein Stützabschnitt (38) die Stelleinheit (40) in und der andere Stützabschnitt (39) die Halterung (10) entgegengesetzt zur Höhenrichtung verstellt.

2. Schublade (50) nach Anspruch 1,
**dadurch gekennzeichnet,**
**dass** die Stützabschnitte (38, 39) spielfrei oder im Wesentlichen spielfrei gegenüber den Gegenlagern (10.16, 10.17) zumindest in einem Teilbereich ihrer Bewegung geführt sind.

3. Schublade (50) nach einem der Ansprüche 1 oder 2,
**dadurch gekennzeichnet,**
**dass** die Justiereinrichtung (30) drehbar an der Halterung (10) oder der Stelleinheit (40) gehalten ist.

4. Schublade (50) nach einem der Ansprüche 1 bis 3,
**dadurch gekennzeichnet,**
**dass** die Justiereinheit (30) eine Werkzeugaufnahme (31) aufweist, die seitlich in Richtung der Drehachse des Justierelementes (30) zugänglich ist.

5. Schublade (50) nach einem der Ansprüche 1 bis 4,
**dadurch gekennzeichnet,**
**dass** das Justiereinrichtung (30) zwischen zwei oder mehreren Rastpositionen verstellbar ist, wobei die Rastpositionen vorzugsweise im gleichen Teilungsabstand zueinander beabstandet sind.

6. Schublade (50) nach einem der Ansprüche 1 bis 5,
**dadurch gekennzeichnet,**
**dass** die Stelleinheit (40) einteilig angeformte Führungsstücke (43, 44, 45) aufweist, die mit Führungsabschnitten (10.5 bis 10.8) der Halterung (10) zur Bildung einer Schiebeführung zusammenarbeiten.

7. Schublade (50) nach einem der Ansprüche 1 bis 6,
**dadurch gekennzeichnet,**
**dass** die Justiereinrichtung (30) mittels des Lagerteils (20) drehbar und in Richtung der Drehachse gesichert gehalten ist.

8. Schublade (50) nach Anspruch 7,
**dadurch gekennzeichnet,**
**dass** das Lagerteil (20) einen angeformten Lageransatz (25) aufweist, der mit einer Lageraufnahme (37) der Justiereinheit (30) zur Bildung eines Drehlagers zusammenarbeitet.

9. Schublade (50) nach Anspruch 7 oder 8,
**dadurch gekennzeichnet,**
**dass** die Halterung (10), die Stelleinheit (40) und das Lagerteil (20) miteinander verbunden, insbesondere verrastet, sind.

10. Schublade (50) nach einem der Ansprüche 1 bis 9
**dadurch gekennzeichnet,**
**dass** die Gegenlager (10.16, 10.17) einteilig an die Halterung (10) oder die Stelleinheit (40) angeformt sind.

11. Schublade (50) nach einem der Ansprüche 1 bis 10,
**dadurch gekennzeichnet,**
**dass** die Halterung (10) eine rückwärtige Abwinklung (10.3) aufweist zur Ankopplung an eine Rückwand einer Schublade.

## Claims

1. Drawer (50) with a front panel, a rear wall, a base (54), two frames (51) which extend in the depth direction of the drawer (50) and are designed as hollow-wall frames, the frames (51) each receiving in their rear region an adjusting device for adjusting the alignment of a front panel of the drawer (50), the adjusting device having a holder (10), an adjusting unit (40), an adjusting device (30) and a bearing part (20),
wherein the adjusting unit (40) is adjustable relative to the holder (10) by means of the adjusting device (30),
wherein the adjusting unit (40) is adjustable guided in two opposite directions, the adjusting unit (40) being adjustable relative to the holder (10) in the height direction of the drawer (50),
wherein the adjusting unit (30) has two adjustable supporting sections (38, 39) which cooperate with counter bearings (10.16, 10.17), wherein the supporting sections (38, 39) are each adjustable on an eccentric path, and wherein the eccentric paths are oriented in opposite directions,
wherein one support section (38) adjusts the adjusting unit (40) in and the other support section (39) adjusts the holder (10) in the opposite direction to the height direction.

2. Drawer (50) according to claim 1,
**characterized in,**
**that** the support sections (38, 39) are guided without play or substantially without play relative to the counter bearings (10.16, 10.17) at least in a partial range of their movement.

3. Drawer (50) according to one of the claims 1 or 2,
**characterized in,**
**that** the adjusting device (30) is rotatably held on the holder (10) or the adjusting unit (40).

4. Drawer (50) according to one of the claims 1 to 3,
**characterized in,**
**that** the adjustment unit (30) has a tool holder (31) which is accessible laterally in the direction of the axis of rotation of the adjustment element (30).

5. Drawer (50) according to any one of claims 1 to 4,
**characterized in,**
**that** the adjusting device (30) is adjustable between two or more detent positions, the detent positions preferably being spaced at the same pitch distance from each other.

6. Drawer (50) according to one of the claims 1 to 5,
**characterized in,**
**that** the adjusting unit (40) has integrally formed guide pieces (43, 44, 45) which cooperate with guide sections (10.5 to 10.8) of the holder (10) to form a sliding guide.

7. Drawer (50) according to one of the claims 1 to 6,
**Characterized in,**
**that** the adjusting device (30) is held rotatably and secured in the direction of the axis of rotation by means of the bearing part (20).

8. Drawer (50) according to claim 7,
**characterized in,**
**that** the bearing part (20) has an integrally formed bearing shoulder (25) which cooperates with a bearing receptacle (37) of the adjusting unit (30) to form a pivot bearing.

9. Drawer (50) according to claim 7 or 8,
**characterized in,**
**that** the holder (10), the adjusting unit (40) and the bearing part (20) are connected to one another, in particular latched.

10. Drawer (50) according to any one of claims 1 to 9,
**characterized in,**
**that** the counter bearings (10, 16, 10.17) are integrally formed on the holder (10 or the adjusting unit (40).

11. Drawer (50) according to any one of claims 1 to 10,
**characterized in,**
**that** the holder (10) has a rear angled portion (10.3) for coupling to a rear wall of the drawer.

## Revendications

1. Tiroir (50) avec un panneau frontal, une paroi arrière, un fond (54), deux cadres (51) s'étendant dans la direction de la profondeur du tiroir (50), qui sont réalisés sous forme de cadres à paroi creuse, les cadres (51) recevant chacun dans leur zone arrière un dispositif de réglage pour le réglage de l'orientation d'un panneau frontal du tiroir (50), le dispositif de réglage présentant un support (10), une unité de réglage (40), un dispositif de réglage (30) et une partie de palier (20),
dans lequel l'unité de réglage (40) est réglable par rapport au support (10) au moyen du dispositif de réglage (30), dans lequel l'unité de réglage (40) est guidée de manière réglable dans deux directions opposées,
dans lequel l'unité de réglage (40) est réglable par rapport au support (10) dans la direction verticale de la
du tiroir (50),
dans lequel l'unité de réglage (30) comporte deux sections de support réglables (38, 39) qui coopèrent avec des contre-paliers (10.16, 10.17), dans lequel les sections de support (38, 39) sont réglables chacune sur une trajectoire excentrique, et dans lequel les trajectoires excentriques sont orientées dans des directions opposées, dans lequel une section de support (38) ajuste l'unité de réglage (40) dans et l'autre section de support (39) ajuste le support (10) dans la direction opposée à la direction de la hauteur.

2. Tiroir (50) selon la revendication 1,
caractérisé en que les sections de support (38, 39) sont guidées sans jeu ou pratiquement sans jeu par rapport aux contre-paliers (10.16, 10.17) au moins dans une partie de leur mouvement.

3. Tiroir (50) selon l'une des revendications 1 ou 2,
caractérisé en que le dispositif de réglage (30) est maintenu en rotation sur le support (10) ou l'unité de réglage (40).

4. Un tiroir (50) selon l'une des revendications 1 à 3,
**caractérisé en ce que** l'unité de réglage (30) comporte un porte-outil (31) qui est accessible latéralement dans la direction de l'axe de rotation de l'élément de réglage (30).

5. Tiroir (50) selon l'une des revendications 1 à 4,
caractérisé en que le dispositif de réglage (30) est réglable entre deux ou plusieurs positions d'arrêt, les positions d'arrêt étant de préférence espacées par le même pas.

6. Tiroir (50) selon l'une des revendications 1 à 5,
**caractérisé en ce que** l'unité d'actionnement (40) comporte des pièces de guidage (43, 44, 45) formées d'un seul tenant, qui coopèrent avec les sections de guidage (10.5 à 10.8) du support (10) pour former un guide coulissant.

7. Tiroir (50) selon l'une des revendications 1 à 6,
caractérisé en que le dispositif de réglage (30) est maintenu en rotation au moyen de la pièce d'appui (20) et fixé dans la direction de l'axe de rotation.

8. Tiroir (50) selon la revendication 7,
caractérisé en que la partie de palier (20) présente un épaulement de palier (25) formé d'un seul tenant, qui coopère avec un logement de palier (37) de l'unité de réglage (30) pour former un palier pivotant.

9. Tiroir (50) selon les revendications 7 ou 8,
**caractérisé en ce que** le support (10), l'unité de réglage (40) et la pièce d'appui (20) sont reliés entre eux, en particulier verrouillés.

10. Tiroir (50) selon l'une des demandes 1 à 9,
caractérisé en que les contre-paliers (10, 16, 10.17) sont intégralement formés sur le support (10 ou l'unité de réglage (40).

11. Tiroir (50) selon l'une des demandes 1 à 10,
**caractérisé en ce que** le support (10) comporte une partie coudée vers l'arrière (10.3) pour l'accrochage à une paroi arrière du tiroir.
